# EUROPÄISCHE PATENTANMELDUNG

(11) **EP 1 942 002 A2**
(43) Veröffentlichungstag der Anmeldung: **09.07.2008**
(21) Anmeldenummer: 07017461.0
(22) Anmeldetag: 06.09.2007
(51) Int. Cl.: B32B 27/36

(54) **Beschichtete Polyesterfolie auf Basis von titankatalysierten Polyestern**

(30) Priorität: 15.09.2006 DE 102006043337
(71) Anmelder: Mitsubishi Polyester Film GmbH, 65203 Wiesbaden (DE)
(72) Erfinder: Bennett, Cynthia, 55232 Alzey (DE); Pfeiffer, Herbert, 55126 Mainz (DE); Hilkert, Gottfried, 55291 Saulheim (DE)
(74) Vertreter: Schweitzer, Klaus

(57) **Zusammenfassung**

Die Erfindung betrifft eine biaxial orientierte Polyesterfolie, welche eine Substratschicht und eine

auf diese durch Beschichten aufgebrachte, heißsiegelbare und gegenüber amorphem und kristallinem Polyester peelfähige Schicht (D) aufweist, wobei
a) die Schicht (D) einen Polyester enthält, der aromatische und aliphatische Dicarbonsäureeinheiten aufweist, und
b) die Schicht (D) und zumindest der direkt an die Schicht (D) angrenzende Teilbereich der Substratschicht titankatalysierten Polyester mit einer Titankonzentration von 1 bis 150 ppm enthalten.

Die Substratschicht kann mehrschichtig sein und enthält bevorzugt PET. Der Copolyester der Schicht (D) enthält Terephthalsäure-, Isophthalsäure-, Azelainsäure- und Ethylenglykol-Einheiten.

## Beschreibung

Die Erfindung betrifft eine mit einem aliphatischen und aromatischen Copolyester beschichtete, biaxial orientierte Polyesterfolie, die heißsiegelbar und zu amorphen und kristallinen Polyestern peelfähig ist, hergestellt auf Basis von titankatalysierten Polyestern. Die Erfindung betrifft weiterhin ein Verfahren zur Herstellung der Folie und ihre Verwendung.

Heißsiegelbare und peelfähige, biaxial orientierte Polyesterfolien sind nach dem Stand der Technik bekannt. Daneben sind auch Polyesterfolien bekannt, die unter Verwendung von titankatalysierten Polyesterrohstoffen hergestellt werden.

In der WO 96/19333 wird ein Verfahren zur Herstellung von peelfähigen Folien beschrieben, bei dem die peelfähige Schicht in-line auf die Polyesterfolie aufgebracht wird. Die peelfähige Schicht enthält einen Copolyester, aufgebaut aus einer aromatischen Dicarbonsäure, einer aliphatischen Dicarbonsäure, einer Dicarbonsäure mit einer freien Säuregruppe oder einem Salz davon, einem Glykol mit 2 bis 12 Kohlenstoffatomen und einem Polyalkyldiol zur Bildung des Copolyesters. Die Beschichtung wird aus einer wässrigen Dispersion oder einer Lösung an die Folie angetragen. Die Folie ist hinsichtlich ihrer optischen Eigenschaften und ihres Migrationsverhaltens verbesserungswürdig.

In der WO 02/059186 wird ein Verfahren zur Herstellung von peelfähigen Folien beschrieben, bei dem die heißsiegelbare, peelfähige Schicht in-line auf die Polyesterfolie aufgebracht wird. Angewendet wird die so genannte Schmelze-Beschichtung (melt-coating), wobei vorzugsweise die längsgestreckte Folie mit dem heißsiegelbaren, peelfähigen Polymer beschichtet wird. Das heißsiegelbare Polymer enthält Polyester auf Basis von aromatischen und aliphatischen Säuren sowie auf Basis von aliphatischen Diolen. In der Anmeldung wird die an sich bekannte Schmelze-Beschichtung von der an sich bekannten Extrusions-Beschichtung technisch und über die Viskosität der Schmelze abgegrenzt. Die Folie ist hinsichtlich ihrer optischen Eigenschaften und ihres Migrationsverhaltens verbesserungswürdig.

EP-A-1 471 096, EP-A-1 471 097, EP-A-1 1475 228, EP-A-1 475 229, EP-A-1 471 094 und EP-A-1 471 098 beschreiben heißsiegelbare und gegenüber A/CPET peelfähige Polyesterfolien mit ABC-Schichtaufbau, die zur Einstellung der gewünschten Peeleigenschaften in der peelfähigen und heißsiegelbaren Deckschicht A amorphe, aromatische und aliphatische Copolyester und entweder ca. 2 bis 10 Gew.-% anorganische oder organische Partikel oder aber ein polyesterunverträgliches Polymer wie z. B. Norbornen/Ethylen enthalten. Die Folien zeichnen sich durch gute Peeleigenschaften aus, sind aber hinsichtlich der optischen Eigenschaften und ihres Migrationsverhaltens verbesserungswürdig.

Beschrieben sind auch Polyesterfolien, die auf Basis von titankatalysierten Polyestern hergestellt wurden. So ist beispielsweise in der EP-A-1 375 572 eine stabilisierte Folie auf Basis von titankatalysierten Polyestern beschrieben.

Aus herkömmlichen Folien mit einer peelfähigen Oberflächenschicht gibt es bei Garvorgängen eine unerwünschte Migration des Pölykondensationskatalysators auf Basis von Antimon in Lebensmittel, die in der Folie verpackt sind. Im Gegensatz zu PET-Folien ohne Peel-Schicht, in denen es völlig ausreichend ist, die Oberflächenschicht antimonfrei herzustellen, um die Antimonmigration zu verhindern, ist diese Maßnahme allein bei peelfähigen Oberflächen nicht ausreichend.

Die in der industriellen Praxis üblicherweise verwendeten Katalysatoren zur Polykondensation von Polyestern sind Antimon-, Titan- und Germaniumverbindungen. Titan enthaltende Katalysatoren haben die höchste katalytische Aktivität, gefolgt von Germaniumkatalysatoren. Antimonkatalysatoren weisen die geringste relative Aktivität auf. Dennoch wird der bei weitem überwiegende Teil der auf dem Weltmarkt verwendeten Polyester mit Hilfe von Antimonkatalysatoren hergestellt. Dies liegt daran, dass Germaniumkatalysatoren auf Grund ihres extrem hohen Preises in der Regel unwirtschaftlich sind und Titankatalysatoren bei Polyestern mit hohem Schmelzpunkt wie PET oder PEN zu einer unerwünschten Gelbfärbung der so hergestellten Folie rühren können.

Die geringe relative Aktivität erfordert größere Einsatzmengen von Antimonkatalysatoren bei der Herstellung von Polyesterrohstoffen. Die üblichen Konzentrationen von Antimonkatalysatoren im Polyesterrohstoff liegen im Bereich von 150 bis 350 ppm. Diese Konzentrationen führen zu einer merklichen Trübungserhöhung und Glanzreduzierung der Folie, die unerwünscht ist. Daneben besteht zusätzlich ein großes Interesse daran, die Antimonkonzentration in Polyesterprodukten deutlich zu verringern - wenn nicht sogar zu vermeiden, da u. a. auch EU-Richtlinien Grenzwerte für die Antimonmigration vorschreiben. Insbesondere bei mehrschichtigen Folien, bei denen die Basisschicht aus PET (Polyethylenterephthalat) und die auf der Basisschicht aufgebrachten Deckschichten eine geringe Kristallinität und geringe Glasübergangstemperaturen aufweisen, sind diese Grenzwerte nur schwer einzuhalten.

Aufgabe der vorliegenden Erfindung war es, eine heißsiegelbare und peelfähige, biaxial orientierte Polyesterfolie zur Verfügung zu stellen, die die Nachteile der Folien nach dem Stand der Technik nicht mehr aufweist und sich insbesondere dadurch auszeichnet, dass
- die optischen Eigenschaften der Folie ansprechend sind (dies bedeutet eine geringe Gelbfärbung, eine niedrige Trübung und einen hohen Glanz der Folie),
- die Gesamtmigration bei hohen Temperaturen (175 °C) in fetthaltigen Lebensmitteln (Olivenöl) bevorzugt maximal 10 mg/dm² Folienoberfläche beträgt,
- die Migration von Antimon in sauren Lebensmitteln (3 % Essigsäure) bei erhöhter Temperatur nicht nachweisbar ist,
- die sensorischen Eigenschaften der Folie als gut (bevorzugt ≤ 2,5) bewertet werden und
- bei der Herstellung der Folie gewährleistet ist, dass das Regenerat in einer Menge von bis zu ca. 60 Gew.-% wieder der Extrusion zugeführt werden kann, ohne dass dabei die physikalischen, insbesondere aber die optischen Eigenschaften der Folie nennenswert negativ beeinflusst werden.

Gelöst wird die Aufgabe durch die Bereitstellung einer biaxial orientierten Polyesterfolie, welche eine Substrat- oder Basisschicht und eine auf diese durch Beschichten aufgebrachte, heißsiegelbare und gegenüber amorphem und kristallinem Polyester peelfähige Schicht (D) aufweist, wobei
a) die Schicht (D) Polyester enthält, der aromatische und aliphatische Dicarbonsäureeinheiten aufweist, und
b) die Schicht (D) und zumindest der direkt an die Schicht (D) angrenzende Teilbereich der Substratschicht titankatalysierten Polyester mit einer Titankonzentration von 1 bis 150 ppm enthalten.

Bevorzugt ist dieser Teilbereich der Substrat- oder Basisschicht mindestens 2 µm dick. Die Substratschicht kann aus einer Schicht bestehen, die dann als Polyester ausschließlich titankatalysierten Polyester enthält. Oder sie besteht aus mehreren Schichten, wobei dann der o. g. Teilbereich einer solchen Schicht, die direkt an die Schicht (D) angrenzt, entspricht. Die anderen Schichten der Substratschicht können dann z. B. antimonkatalysiert sein.

Dabei bedeutet ppm die Konzentration von Titan (Gewichtsteile bezogen auf Titan, das aus dem verwendeten Polykondensationskatalysator, z. B. Kalium-Titanyloxalat, stammt) im titankatalysierten Polyester, der bei der Herstellung der Substratschicht und der Schicht (D) verwendet wird. Bevorzugt beträgt die Titankonzentration in diesen Polyestern 2 bis 120 ppm, insbesondere 5 bis 50 ppm.

In einer bevorzugten Ausführungsform enthalten die Substratschicht und die Schicht (D) oder die gesamte Folie als Polyester ausschließlich titankatalysierte Polyester. Bevorzugt ist weiterhin, dass die Substratschicht und die Schicht (D) oder die gesamte Folie als Polymere ausschließlich titankatalysierte Polyester enthalten.

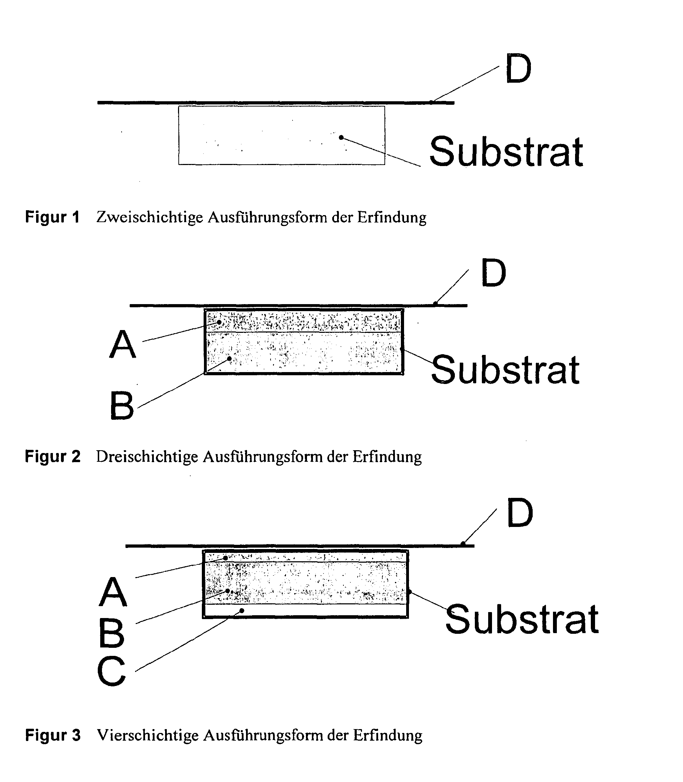

Die mit der heißsiegelbaren und peelfähigen Schicht (D) beschichtete biaxial orientierte Polyesterfolie gemäß der vorliegenden Erfindung ist zumindest zweischichtig aufgebaut. Sie besteht dann aus der Substratschicht und der auf dieser durch Beschichtung aufgebrachten siegelbaren und peelfähigen Schicht (D), wobei beide Schichten bevorzugt auf Basis von titankatalysierten Polyestern aufgebaut sind (vgl. Figur 1).

In einer bevorzugten Ausführungsform ist die Folie drei- oder mehr als dreischichtig aufgebaut.

Im Falle der dreischichtigen Ausführungsform besteht die biaxial orientierte Polyesterfolie wiederum aus der Substratschicht und der auf dieser durch Beschichtung aufgebrachten heißsiegelbaren und gegenüber amorphem und kristallinem Polyester peelfähigen Schicht (D). Die Substratschicht ist in diesem Fall vorzugsweise coextrudiert und besteht aus den beiden Schichten (A) und (B), wobei zumindest die Schicht (A) auf Basis von titankatalysierten Polyestern aufgebaut ist (vgl. Figur 2). In diesem Fall sind die Schichten (A) und (D) auf Basis von titankatalysierten Polyestern aufgebaut. In einer vorteilhaften Ausführungsform und bevorzugt für den Fall, dass die Schicht (A) in der Dicke kleiner ist als 2 µm, sind alle drei Schichten (BA-D) auf Basis von titankatalysierten Polyestern aufgebaut. Die Schicht (A) entspricht, wie in Fig. 2 gezeigt, hier dem Teilbereich der Substratschicht, der direkt an die Schicht (D) angrenzt.

Im Falle der besonders bevorzugten vierschichtigen Ausführungsform besteht die biaxial orientierte Polyesterfolie wiederum aus der Substratschicht und der auf dieser durch Beschichtung aufgebrachten heißsiegelbaren und gegenüber amorphem und kristallinem Polyester peelfähigen Schicht (D). Die Substratschicht ist coextrudiert und besteht in diesem Fall aus der Basisschicht (B) und den beiden Deckschichten (A) und (C), wobei zumindest die Schicht (A), welche an (D) angrenzt, auf Basis von titankatalysierten Polyestern aufgebaut ist (vgl. Figur 3). In diesem Fall sind dann zumindest die Schichten (A) und (D) auf Basis von titankatalysierten Polyestern aufgebaut. In einer weiteren vorteilhaften Ausführungsform und bevorzugt für den Fall, dass die Schicht (A) eine Dicke von kleiner als 2 µm aufweist, sind alle drei (BA-D) oder aber alle vier Schichten (CBA-D) auf Basis von titankatalysierten Polyestern aufgebaut.

Ist nur eine der beiden Schichten (A) und (D), z. B. die durch Beschichtung aufgebrachte Schicht (D) auf Basis von titankatalysierten Polyestern aufgebaut, die Schicht (A) aber weiterhin auf Basis von antimonkatalysierten Polyestern, so ist das Migrationsverhalten der Folie im Sinne der Erfindung weiterhin unzureichend. In diesem Fall findet die Migration des Antimons aus dem in der Schicht (A) enthaltenen Katalysator durch die amorphe Schicht (D) statt, die infolge ihres morphologischen Aufbaus (amorph) keine oder nur eine unzureichende Sperrwirkung darstellt. Im umgekehrten Fall, bei dem die Schicht (A) auf Basis von titankatalysierten Polyestern aufgebaut ist, die Schicht (D) aber weiterhin auf Basis von antimonkatalysierten Polyestern, verhält es sich ähnlich unerwünscht.

Erfindungsgemäß beträgt die Dicke "d" des zur Schicht (D) direkt benachbarten und titankatalysierten Teilbereichs der Substratschicht bevorzugt mindestens 2 µm. Ist die Schichtdicke geringer als 2 µm, so ist u. U. die Sperrwirkung dieser Schicht (A), z. B. gegenüber einer auf Antimonbasis aufgebauten Schicht (B und/oder C), weiterhin im Sinne der Erfindung unzureichend.

Das Material der durch Beschichtung aufgebrachten Schicht (D) besteht überwiegend aus Polyester. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von bevorzugt 25 bis 95 Mol-%, insbesondere 40 bis 90 Mol-%, besonders bevorzugt 50 bis 88 Mol-%, enthalten. Die auf die aliphatischen Dicarbonsäuren zurückgehenden Einheiten sind in dem Polyester in einer Menge von bevorzugt 5 bis 75 Mol-%, insbesondere 10 bis 60 Mol-%, besonders bevorzugt 12 bis 50 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind die Pimelinsäure, die Korksäure, die Azelainsäure, die Sebazinsäure, die Glutarsäure und die Adipinsäure. Insbesondere bevorzugt sind die Azelainsäure, die Sebazinsäure und die Adipinsäure.

Bevorzugte aromatische Dicarbonsäuren sind die Terephthalsäure, die Isophthalsäure und die 2,6-Naphthalindicarbonsäure, insbesondere die Terephthalsäure und die Isophthalsäure. Bevorzugte Diole sind Ethylenglykol, Butylenglykol und Neopentylglykol.

Die durch Beschichtung aufgebrachte heißsiegelbare und peelfähige Schicht (D) besitzt gegenüber amorphem und kristallinem Polyester [z. B. Menüschalen aus amorphem und kristallinem Polyethylenterephthalat (APET/CPET)] eine Siegelanspringtemperatur von bevorzugt 150 °C und weniger und eine Siegelnahtfestigkeit von bevorzugt mindestens 2 N/15 mm (Siegelung bei einer Temperatur von mindestens 180 °C). Die Schicht (D) hat gegenüber amorphem und kristallinem Polyester eine maximale Siegeltemperatur im Allgemeinen von ca. 220 °C, wobei im gesamten Siegelbereich (Mindestsiegeltemperatur bis maximale Siegeltemperatur) eine gegenüber amorphem und kristallinem Polyester peelfähige Folie erhalten wird.

Unter heißsiegelbar wird hier die Eigenschaft einer coextrudierten Polyesterfolie verstanden, die zumindest eine Schicht [= heißsiegelbare Deckschicht (A)] enthält, die mittels Siegelbacken durch Anwendung von Wärme (130 bis 220 °C) und Druck (2 bis 5 bar) in einer bestimmten Zeit (0,2 bis 2 s) mit sich selbst (Fin-Siegelung) bzw. mit einem Substrat aus thermoplastischem Kunststoff (hier insbesondere PET) verbunden werden kann, ohne dass dabei die Trägerschicht [= Basisschicht (B)] selbst plastisch wird.

Unter peelfähig wird hier die Eigenschaft einer coextrudierten Polyesterfolie verstanden, die zumindest eine Schicht [= heißsiegelbare und peelfähige Deckschicht (A)] enthält, die nach der Heißsiegelung auf ein Substrat (hier im wesentlichen PET) derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf.

Zur Verbesserung der Handhabung der Folie, der Verarbeitbarkeit der Folie, insbesondere aber auch zur Verbesserung des Abziehverhaltens der Folie von z. B. einer Menüschale (Peelfähigkeit) ist es von Vorteil, die Schicht (D) weiter zu modifizieren.

Dies geschieht am besten mit Hilfe von geeigneten Antiblockmitteln (Partikeln), die der Siegel-und Peelschicht (D) gegebenenfalls zugegeben werden, und zwar in solchen Mengen, dass sich das Abziehverhalten der Folie von der Menüschale weiter verbessert, ein Verblocken der Folie verhindert und das Verarbeitungsverhalten der Folie optimiert wird.

Es hat sich als günstig erwiesen, dass zumindest die Schicht (D) der Polyesterfolie Partikel in einer bestimmten Größe und in einer bestimmten Konzentration enthält. Es können auch Mischungen von zwei und mehreren verschiedenen Partikeln oder Mischungen von Partikeln in gleicher chemischer Zusammensetzung, aber unterschiedlicher Partikelgröße der Schicht (D) zugegeben werden.

Übliche Antiblockmittel (auch als "Pigmente" oder "Partikel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Titandioxid, Kaolin oder vernetzte Polystyrol-oder Arcrylat-Partikel. Die Partikel können den Rohstoffen für die Schicht (D) in den jeweils vorteilhaften Konzentrationen zugegeben werden, z. B. als glykolische Dispersion während der Polykondensation, über Masterbatche bei der Granulierung des Copolyesters oder bei der Herstellung der Beschichtungsdispersion (Masterbatchtechnologie oder Direktadditivierung).

Bevorzugte Partikel sind synthetisch hergestellte, amorphe SiO₂-Partikel Diese Partikel werden hervorragend in die Polymermatrix eingebunden und erzeugen nur wenige Hohlräume. Hohlräume entstehen an den Partikeln bei der biaxialen Orientierung, verursachen im Allgemeinen Trübung und sind daher für die vorliegende Erfindung wenig geeignet. Zur Herstellung der SiO₂-Partikel werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann es getrocknet und weiterverarbeitet werden. Durch Kontrolle des Waschwasser-pH-Wertes und der Trocknungsbedingungen können die wichtigen physikalischen Parameter wie z. B. Porenvolumen, Porengröße und die Größe der Oberfläche des anfallenden Silikagels variiert werden. Die gewünschte Partikelgröße (z. B. den d₅₀-Wert) erhält man durch geeignete Mahlung des Silikagels (z. B. mechanisch oder hydromechanisch). Solche Partikel können z. B. über die Firmen Grace, Fuji, Degussa oder Ineos bezogen werden.

Es hat sich als besonders vorteilhaft erwiesen, Teilchen mit einem mittleren Partikeldurchmesser d₅₀ von 2,5 bis 8 µm zu verwenden. Zur Bereitstellung der gewünschten Peeleigenschaften hat es sich als günstig erwiesen, wenn die Deckschicht (D) Partikel in einer Konzentration von 0,5 bis 10 Gew.-% enthält, bezogen auf das Gesamtgewicht von (D).

Die Substratschicht [bzw. die Schichten (A), (B) und (C)] besteht zu mindestens 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT)), aus Ethylenglykol, Terephthalsäure und Biphenyl-4,4'-dicarbonsäure (= Polyethylen-terephthalat-bibenzoat, PETBB) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. Im Allgemeinen können für die Substratschicht auch Copolymere oder Mischungen oder Blends aus den genannten Homo-und/oder Copolymeren verwendet werden. (Bei der Angabe der Mengen für die Dicarbonsäuren bildet die Gesamtmenge aller Dicarbonsäuren 100 Mol-%. Analog bildet die Gesamtmenge aller Diole auch 100 Mol-%.)

Geeignete andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)-Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Im Falle der bevorzugten dreischichtigen Folie mit BA-D-Aufbau oder im Falle der besonders bevorzugten vierschichtigen Folie mit CBA-D-Aufbau bestehen die Polymere für die jeweiligen Schichten (A, B und C) im Wesentlichen aus den für die Substratschicht beschriebenen Polymeren.

Um das Verarbeitungsverhalten der Folie nach der vorliegenden Erfindung weiterhin zu verbessern, ist es von Vorteil, in die Substratschicht bei einem zweischichtigen Folienaufbau (Substratschicht-D) bzw. zumindest in die nicht siegelfähige Schicht (B) bei einem dreischichtigen Folienaufbau (BA-D) bzw. zumindest in die beiden nicht siegelfähigen Schichten (A und C) bei einem vierschichtigen Folienaufbau (CBA-D) ebenfalls Partikel einzuarbeiten, wobei in den vorgenannten Fällen für die entsprechenden Schichten (A, B und C) zweckmäßiger Weise die gleichen oder ähnliche Pigmente verwendet werden wie für die Schicht (D).

Bei allen Ausführungsformen der erfindungsgemäßen Folie liegt die Dicke der heißsiegelbaren und peelfähigen, durch Beschichtung aufgebrachten Schicht (D) bevorzugt im Bereich von 0,5 und 10 µm.

Die Gesamtdicke der erfindungsgemäßen Polyesterfolie kann innerhalb weiter Grenzen variieren. Sie beträgt bevorzugt 3 bis 500 µm, insbesondere 4 bis 450 µm und vorzugsweise 5 bis 400 µm.

Die Substratschicht bzw. die die Substratschicht bildenden Schichten und die anderen Schichten der Folie können zusätzlich übliche Additive wie Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt.

Darüber hinaus können die titankatalysierten Polyester ein oder mehrere im Polyester gelöste Farbmittel enthalten. Diese Farbmittel können dem Polyester bereits bei der Polykondensation zugesetzt werden oder aber mittels Masterbatch-Technologie unmittelbar vor der Folienherstellung zugegeben werden. Zur Kompensation einer leichten Gelbfärbung der titankatalysierten Polyester können kleine Mengen (bevorzugt < 100 ppm) organische lösliche Farbstoffe oder anorganische Zusätze wie zum Beispiel Cobaltacetat verwendet werden. Wird eine Einfärbung der Folie erwünscht, so können größere Mengen (bevorzugt bis 20 %) organische oder anorganische Farbstoffe bzw. Farbpigmente verwendet werden.

Geeignete lösliche Farbstoffe sind beispielsweise diejenigen, die von der Firma Clariant unter dem Handelsnamen ^{®}Polysynthren oder von der Firma Bayer unter dem Handelsnamen ^{®}Macrolex angeboten werden.

Gegenstand der vorliegenden Erfindung ist auch ein Verfahren zur Herstellung der erfindungsgemäßen Polyesterfolie, die heißsiegelbar und zu amorphen und kristallinen Polyestern peelfähig ist. Das Verfahren beruht im Wesentlichen auf der Herstellung der Substratfolie aus (biaxial) orientiertem Polyester und Beschichten dieser Folie mit einer heißsiegelbaren und peelfähigen Schicht (D). Das Verfahren umfasst
a) das Herstellen einer ein- oder mehrschichtigen Substratfolie aus im Wesentlichen Polyester durch Extrusion oder durch Coextrusion sowie Ausformen der Schmelze(n) zu einem flachen, unorientierten Schmelzefilm,
b) Strecken der Substratfolie in einer ersten Richtung,
c) optionales Strecken der Substratfolie in einer zweiten, zur ersten orthogonalen Richtung,
d) optionales Thermofixieren der gestreckten Folie,
e) Beschichten zumindest einer Oberfläche der Substratfolie zur Erzeugung der Schicht (D), wobei das Beschichten der Substratfolie entweder
f) in-line, d. h. während der Herstellung der Substratfolie entweder vor dem Verfahrensschritt b) oder bevorzugt zwischen den Verfahrensschritten b) und c), oder
g) off-line, d. h. nach der Herstellung der Substratfolie in einem separaten Arbeitsschritt erfolgen kann.

### Herstellung der Substratfolie

Zunächst wird das Polymer bzw. die Polymermischung der einzelnen Schichten in einem Extruder komprimiert und verflüssigt. Die Schmelzen werden gleichzeitig durch eine Breitschlitzdüse gepresst, und die ausgepresste mehrschichtige Folie wird auf einer oder mehreren Abzugswalzen abgezogen, wobei sie abkühlt und sich verfestigt.

Die biaxiale Verstreckung der Folie wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufender Walzen durchführen. Zum Querverstrecken benutzt man im Allgemeinen einen entsprechenden Kluppenrahmen.

Im Falle eines mehrschichtigen Folienaufbaus (Substratschicht aus mehreren Schichten) werden die Polymere für die jeweiligen Schichten über verschiedene Extruder dem (Coextrusions-) System zugeführt. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung der Folie wird im Allgemeinen sequenziell durchgeführt. Eine simultane Streckung der Folie ist auch möglich, ist aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 60 bis 130 °C (Aufheiztemperaturen 60 bis 130 °C) und in Querrichtung in einem Temperaturbereich von 90 °C (Beginn der Streckung) bis 140 °C (Ende der Streckung) durchgeführt. Das Längsstreckverhältnis liegt bevorzugt im Bereich von 2:1 1 bis 5,5:1, bevorzugt von 2,2:1 1 bis 5:1. Das Querstreckverhältnis liegt allgemein im Bereich von 2,4:1 bis 5:1, bevorzugt von 2,6:1 bis 4,5:1.

Vor der Querstreckung können eine oder beide Oberflächen der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur Verbesserung von Barriereeigenschaften der Folie führen. Letztere wird beispielsweise durch Auftragung von Barrierebeschichtungen wie EVOH, PVOH o. ä. erhalten. Die genannten Schichten werden vorzugsweise auf diejenige Oberfläche der Polyesterfolie aufgetragen, die nicht heißsiegelbar und peelfähig ist.

Darüber hinaus kann die In-line-Beschichtung dazu verwendet werden, die Folie mit Substanzen zu beschichten, die die Haftung zu der Schicht (D) verbessern oder die Antifogeigenschaften aufweisen. Im ersten Fall wird dazu die an die Schicht (D) direkt angrenzende Oberfläche der Substratfolie beschichtet, im zweiten Fall wird die Folie zuerst mit der Schicht (D) versehen und dann auf diese. Schicht die Antifogschicht aufgetragen.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

### Herstellung der Beschichtung (D)

Das Beschichten zumindest einer Oberfläche der Substratfolie zur Erzeugung von (D) erfolgt nach den an sich nach dem Stand der Technik bekannten Verfahren, entweder
a) in-line, d. h. während der Herstellung der Substratfolie, bevorzugt zwischen den Verfahrensschritten b) und c), oder
b) off-line, d. h. nach der Herstellung der Substratfolie, in einem separaten Arbeitsschritt.

Bei der In-line-Beschichtung können prinzipiell sämtliche nach dem Stand der Technik bekannten Verfahren angewendet werden wie beispielsweise die Tauchbeschichtung (dip coating), die Beschichtung mit dem Stabrakel (Meyer rod), der Rasterwalzenantrag (reverse gravure coating), der Schlitzdüsenantrag (slot oder auch melt coating) oder auch die Extrusionsbeschichtung (extrusion coating). Besonders vorteilhaft ist die Beschichtung mit dem Stabrakel (Meyer rod), der Rasterwalzenantrag (reverse gravure coating) und der Schlitzdüsenantrag (slot oder auch melt coating), mit denen die erforderliche Schichtdicke der Beschichtung ohne Weiteres erreicht werden kann. Die Verfahren sind sämtlich z. B. in "Modern coating and drying technology, Edward Cohen and Edgar Guthoff, VCH, ISBN 1-56081-097-1, ausführlich beschrieben, auf die bevorzugt zurückgegriffen wird.

Ebenfalls wird auf die Lehre der WO 96/19333 und der WO 02/059186 Bezug genommen, in denen spezielle Verfahren zur Herstellung von in-line beschichteten heißsiegelbaren und gegenüber amorphem und kristallinem Polyester peelfähigen Polyesterfolien beschrieben werden. Insbesondere wird an dieser Stelle auf die allgemeinen technischen Informationen zurückgegriffen, die die Handhabung und die Aufbereitung (Präparation) der Beschichtung betreffen.

Entsprechend der Lehre dieser beiden Schriften wird die Beschichtung bevorzugt aus einer wässrigen Dispersion oder aus einer Lösung an die Folie angetragen (WO 96/19333) oder als Schmelze (WO 02/059186) mittels dem "melt coating"-Verfahren (auch als slot coating bekannt). Auf die Präparation des Beschichtungsansatzes beziehungsweise den Antrag der Schmelze an die Bahn wird besonders bevorzugt zurückgegriffen.

Üblicherweise wird bei dem vorliegenden Problem - Beschichten einer Substratfolie mit einer heißsiegelbaren und zu amorphen und kristallinen Polyestern peelfähigen Schicht - die Off-line-Beschichtung angewendet (siehe z.B. WO 02/059186). Hier können prinzipiell sämtliche nach dem Stand der Technik bekannten Beschichtungsverfahren angewendet werden (siehe auch hier "Modern coating and drying technology, Edward Cohen and Edgar Guthoff, VCH, ISBN 1-56081-097-1). Auf die zitierte Schrift wird besonders bevorzugt zurückgegriffen.

### Eigenschaften der Folie

Die Migrationseigenschaften der Folie gemäß der Erfindung sind hervorragend. Die Gesamtmigration bei 175 °C ist bevorzugt kleiner/gleich 10 mg/dm². Die Antimonmigration ist bevorzugt kleiner als 1 µg/dm².

Der Glanz der Folienoberfläche (B) im Falle einer zwei- und dreischichtigen Folie bzw. der Glanz der Folienoberfläche (C) bei einer vierschichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 110 und in einer besonders bevorzugten Ausführungsform mehr als 120. Diese Folienoberflächen eignen sich daher insbesondere für eine weitere funktionelle Beschichtung, für die Bedruckung oder für die Metallisierung.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten bevorzugten Folieneigenschaften noch einmal zusammen:

**Tabelle 1**

| | Bevorzugter Bereich | besonders bevorzugt | ganz bes. bevorzugt | Einheit | Messmethode |
|---|---|---|---|---|---|
| Konzentration des Katalysators auf Basis von Titan in dem Polyester der Schichten (A) und (D) | 1 bis 150 | 2 bis 120 | 5 bis 50 | ppm Ti | |
| Dicke der Schicht (A) | größer/gleich 2 | größer/gleich 3 | größer/gleich 4 | µm | |
| Dicke der Beschichtung (D) | 0,5 bis 10 | 0,8 bis 9 | 1,0 bis 8 | µm | |
| Dicke der Folie | 3 bis 500 | 4 bis 450 | 5 bis 400 | µm | |

| **Eigenschaften** | | | | | |
|---|---|---|---|---|---|
| Trübung der Folie | <20 | < 17 | < 14 | % | ASTM D 1003-52 |
| Glanz der Deckschichten A bzw. C | > 70 bzw. > 100 | > 75 bzw. > 110 | > 80 bzw. > 120 | | DIN 67530 |
| Siegelnahtfestigkeit von DS (D) gegen APET oder CPET | 2 bis 12 | 2,2 bis 10 | 2,4 bis 10 | N/15 mm | |
| Globalmigration (Olivenöl, 175°C, 2Std.) | kleiner/gleich 10 | < 10 | <9 | mg/dm² | DIN EN 1186-4 |
| Antimonmigration der Folie | < 1 | <0,5 | <0,3 | µg/dm² | DIN EN 13130-1 |
| Sensorische Eigenschaften (Wasser und Bratfett) | kleiner/gleich 2,5 | kleiner/gleich 2 | kleiner/gleich 1,5 | Noten | DIN 10955 |

| | | | | | |
|---|---|---|---|---|---|
| DS = Deckschicht | | | | | |

Zur Charakterisierung der Rohstoffe und der Folien wurden im Rahmen der vorliegenden Erfindung die folgenden Messmethoden benutzt:
DIN = Deutsches Institut für Normung
ISO = Int. Organisation für Standardization
ASTM = American Society for Testing and Materials

### Gesamtmigration

Die Gesamtmigration wird nach DIN EN 1186-4:2002 ("Prüfverfahren für die Gesamtmigration in Olivenöl mittels Zelle") gravimetrisch bestimmt. Dafür wird die Peelschicht bzw. die Lebensmittelkontaktseite der Folie in Zelltyp D (in DIN EN 1186-1 beschrieben) für 2 Stunden in Kontakt mit Olivenöl gemäß Anhang A. 1 von DIN EN 1186-1 bei 175 °C kontaktiert. Die Messwerte werden in mg/dm² Kontaktfläche angegeben. Die Nachweisgrenze ist 3 mg/dm².

### Antimonmigration

Die Antimonmigration wird entsprechend der Norm DIN EN 13130-1 bestimmt. Die Peelschicht bzw. die Lebensmittelkontaktseite der Folie wird in Zelltyp D in Kontakt mit 3 Gew.-% Essigsäure für 30 Minuten bei 130 °C und dann 10 Tage bei 40 °C kontaktiert. Die Bestimmung des Antimons in der Essigsäure erfolgt mittels AAS mit der Hydrid-Methode. Die Menge Antimon wird in µg/dm² Kontaktfläche angegeben. Die Nachweisgrenze beträgt 0,2 µg Sb/dm².

### Sensorische Eigenschaften

Die Prüfung wird nach DIN 10955 durchgeführt. Das Prüfmuster wird in direktem Kontakt mit dem Prüflebensmittel Wasser und Bratfett für 20±2 Stunden bei 23±2 °C im Dunkeln gelagert. Anschließend werden die Prüflebensmittel in einem Mikrowellenofen bei 800 Watt auf 100 °C erhitzt. Dann wird der Geschmack des Prüflebensmittels, das mit dem Prüfmuster erhitzt wurde, in einer erweiterten Dreiecksprüfung nach DIN ISO 4120 von sechs Prüfern beurteilt. Als Kontrollprobe dient Wasser bzw. Fett, das in einem Glasgefäß ohne Prüfmuster erhitzt wurde. Aus folgenden Prüfnoten werden die Mittelwerte gebildet:
0 = keine wahrnehmbare Geschmacksabweichung
1 = gerade wahrnehmbare Geschmacksabweichung (noch schwer definierbar)
2 = schwache Geschmacksabweichung
3 = deutliche Geschmacksabweichung
4 = starke Geschmacksabweichung.

### Messung des mittleren Durchmessers d₅₀

Die Bestimmung des mittleren Durchmessers d₅₀ wird mittels Laser auf einem Malvern Master Sizer (Fa. Malvern Instruments, GB) mittels Laserscannung durchgeführt (andere Messgeräte sind z.B. Horiba LA 500 oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert d₅₀ (= Lagemaß für den Mittelwert) und das Streumaß, den sog. SPAN98 (= Maß für die Streuung des Partikeldurchmessers). Der Messvorgang ist automatisch und beinhaltet auch die mathematische Bestimmung des d₅₀-Wertes. Der d₅₀-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten d₅₀-Wert.

### Siegelnahtfestigkeit

Zur Bestimmung der Siegelnahtfestigkeit wird ein Folienstreifen (100 mm lang x 15 mm breit) auf die APET-Seite eines entsprechenden Streifens der APET/CPET-Menüschale gelegt und bei der eingestellten Temperatur von ≥ 180 °C, einer Siegelzeit von 0,5 s und einem Siegeldruck von 3 bar (Siegelgerät HSG/ET der Firma Brugger, München, DE, beidseitig beheizte Siegelbacke) gesiegelt. Die erkalteten gesiegelten Streifen werden in die Zugprüfmaschine (z. B. Zwick) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).
(APET = amorphes PET; CPET = kristallines PET)

### Bestimmung der Mindestsiegeltemperatur (Siegelanspringtemperatur)

Mit dem Siegelgerät HSG/ET der Firma Brugger werden wie zuvor bei der Messung der Siegelnahtfestigkeit beschrieben heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 3 bar und einer Siegeldauer von 0,5 s gesiegelt wird. Die 180°-Siegelnahtfestigkeit wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

### Trübung

Die Trübung wird nach ASTM-D 1003-52 bestimmt.

### Glanz

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Im Folgenden wird die Erfindung anhand von Beispielen näher erläutert.

### Beispiel 1

Chips aus titankatalysiertem Polyethylenterephthalat sowie ein Masterbatch, enthaltend ein titankatalysiertes Polyethylenterephthalat und Antiblockmittel, wurden dem Extruder für die Substratschicht zugeführt. Entsprechend den in untenstehender Tabelle aufgeführten Verfahrensbedingungen wurde die Mischung im Extruder aufgeschmolzen und homogenisiert. Die Zusammensetzung der Substratschicht war wie folgt:
Substratschicht, Mischung aus:
   - 85 Gew.-%: Polyethylenterephthalat mit einem SV-Wert von 800, das 15 ppm Titan aus dem Polykondensationskatalysator Kalium-Titanyloxalat enthält
   - 15 Gew.-%: titankatalysiertes Masterbatch aus 99 Gew.-% Polyethylenterephthalat (SV-Wert von 800) und 1,0 Gew.-% ^{®}Sylobloc 44 H (synthetisches SiO₂, Firma Grace, Worms, DE), d₅₀ = 2,5 µm

Der resultierende Schmelzefilm wurde abgekühlt und anschließend über eine stufenweise Orientierung in Längs- und in Querrichtung eine transparente, einschichtige Folie (= Substrat) mit einer Gesamtdicke von 25 µm hergestellt.

Die Herstellungsbedingungen in den einzelnen Verfahrensschritten waren:

| Extrusion | Temperaturen | B-Schicht: | 280 | °C |
|---|---|---|---|---|
| Längsstreckung | Aufheiztemperatur | | 75-115 | °C |
| | Strecktemperatur | | 115 | °C |
| | Längsstreckverhältnis | | 4,0 | |
| Querstreckung | Aufheiztemperatur | | 100 | °C |
| | Strecktemperatur | | 135 | °C |
| | Querstreckverhältnis | | 4,0 | |
| Fixierung | Temperatur | | 230 | °C |
| | Dauer | | 3 | s |

Die einen aliphatischen und aromatischen Copolyester enthaltende Beschichtung (Schicht D) wurde off-line nach der Herstellung der Substratfolie in einem zweiten Arbeitsschritt auf die Substratfolie aufgebracht.

Zur Herstellung der Beschichtung (D) wurde (in Anlehnung an die WO 02/059186) ein Schlitzdüsenantrag (slot oder auch melt coating) herkömmlicher Bauart verwendet. Für die heißsiegelbare und peelfähige Beschichtung (D) wurde eine Mischung bestehend aus titankatalysiertem Polyester I, titankatalysiertem Polyester II inklusive Antiblockmittel hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die beiden Polyester wurden in 1,3-Dioxolan gelöst, wobei der Feststoffanteil (Polyester I + Polyester II) 10 Gew.-% betrug. Der Nassauftrag wurde so eingestellt, dass eine Schichtdicke von 2 µm trocken realisiert werden konnte. Die eingestellten Temperaturen in den drei Trocknern lagen bei 110 °C, 120 °C und 130 °C, wobei die Maschinengeschwindigkeit 100 m/min betrug. Bei den hergestellten Folien zeigten die mit Gaschromatograph und Headspace vermessenen Proben kein Restlösemittel an. Die Messbedingungen für den Restlösemittelgehalt waren: Temperierzeit im Headspace 25 Minuten bei 100 °C, Temperaturprogramm im GC von 60-140 °C; die Nachweisgrenze lag bei ca. 0,5 mg/m².

Beschichtung (D), Mischung aus:
- 30,0 Gew.-%: Polyester I (= Copolymeres aus 80 Mol-% Ethylenterephthalat, 20 Mol-% Ethylenisophthalat) mit einem SV-Wert von 850, der 15 ppm Titan aus dem Polykondensationskatalysator Kalium-Titanyloxalat enthält. Die Glasübergangstemperatur von Polyester I beträgt ca. 75 °C. Polyester I enthält darüber hinaus 8,0 Gew.-% ^{®}Sylysia 430 (synthetisches SiO₂, Fuji, JP) mit einem Partikeldurchmesser von d₅₀ = 3,4 µm.
- 70 Gew.-%: Polyester II (= Copolymeres enthaltend 40 Mol-% Ethylenazelat, 50 Mol-% Ethylentherephthalat, 10 Mol-% Ethylenisophthalat) mit einem SV-Wert von 1000, der 20 ppm Titan aus dem Polykondensationskatalysator Kalium-Titanyloxalat enthält. Die Glasübergangstemperatur von Polyester II beträgt ca. 0 °C.

In Tabelle 3 sind die Eigenschaften der Folie dargestellt. Laut Messung betrug die Mindestsiegeltemperatur der Folie gegenüber Menüschalen aus APET 132 °C. Die Folie wurde bei 140, 160, 180 und 200 °C gegen APET-Menüschalen gesiegelt (Siegeldruck 3 bar, Siegelzeit 0,5 s). Anschließend wurden Streifen des Verbundes aus erfindungsgemäßer Folie und Menüschale mittels Spannungs-Dehnungstester entsprechend der vorgenannten Messvorschrift auseinander gezogen. Die gemessenen Siegelnahtfestigkeiten sind in Spalte 3 gelistet. Weiterhin hatte die Folie eine ansprechende Optik, gute Migrationswerte und gute sensorische Eigenschaften.

### Beispiel 2

Im Vergleich zu dem vorgenannten Beispiel wurde bei sonst identischem Folienaufbau und Verfahrensweise die Zusammensetzung der Mischung für die Beschichtung (D) geändert. Der Nassauftrag wurde so eingestelt, dass eine Schichtdicke von 3 µm trocken realisiert werden konnte. Die Mischung für die Beschichtung (D) bestand jetzt aus den folgenden Rohstoffen:
- 20,0 Gew.-%: Polyester I (= Copolymeres aus 80 Mol-% Ethylenterephthalat, 20 Mol-% Ethylenisophthalat) mit einem SV-Wert von 850, der 15 ppm Titan aus dem Polykondensationskatalysator Kalium-Titanyloxalat enthält. Die Glasübergangstemperatur von Polyester I beträgt ca. 75 °C. Polyester I enthält darüber hinaus 10,0 Gew.-% ^{®}Sylysia 430 (synthetisches SiO₂ , Fuji, JP) mit einem Partikeldurchmesser von d₅₀ = 3,4 µm.
- 80 Gew.-%: Polyester II, ^{®}Vitel 1912 NSB (titankatylisierter Polyester mit einem SV-Wert von 1050, der 30 ppm Titan aus dem Polykondensationskatalysator enthält; Hersteller: Bostik-Findley, USA; der Polyester enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Die Mindestsiegeltemperatur der Folie gegenüber der APET-Seite von APET/CPET-Menüschalen beträgt jetzt 128°C. Die gemessenen Siegelnahtfestigkeiten sind in Spalte 3 der Tabelle 3 gelistet. Für alle Siegeltemperaturen wurden peelfähige Folien erhalten. Die Siegelnahtfestigkeiten der Folien sind vergleichbar zu denen in Beispiel 1, liegen tendenziell aber etwas höher. Weiterhin hatte die Folie die geforderte ansprechende Optik, gute Migrationswerte und gute sensorische Eigenschaften.

### Beispiel 3

Im Vergleich zu dem vorgenannten Beispiel wurde jetzt eine vierschichtige Folie vom Aufbau DABC hergestellt (vgl. Fig. 3). Die Substratfolie, bestehend aus den Schichten ABC, wurde dabei über die bekannte Technologie der Coxtrusion hergestellt. Die Zusammensetzung der Mischung und die Dicke für die siegelfähige Beschichtung (D) wurden nicht geändert. Ebenfalls nicht geändert wurde der Polyester-Rohstoff für die Schicht (A). Für den Rohstoff der Schicht (B) wurde der gleiche Rohstoff wie für die Schicht (A) verwendet, ausgenommen, dass dieser Rohstoff jetzt antimon-katalysiert ist. Für den Rohstoff der Schicht (C) gilt analoges zum Rohstoff für die Schicht (B). Die Verfahrensweise war zu den zuvor genannten Beispielen vergleichbar.

Beschichtung (D), Mischung aus:
- 20,0 Gew.-%: Polyester I (= Copolymeres aus 80 Mol-% Ethylenterephthalat, 20 Mol-% Ethylenisophthalat), der 15 ppm Titan aus dem Polykondensationskatalysator Titandioxid mit einem SV-Wert von 850 enthält. Die Glasübergangstemperatur von Polyester I beträgt ca. 75 °C. Polyester I enthält darüber hinaus 10,0 Gew.-% ^{®}Sylysia 430 (synthetisches SiO₂, Fuji, JP) mit einem Partikeldurchmesser von d₅₀ = 3,4 µm.
- 80 Gew.-%: Polyester II, ^{®}Vitel 1912 NSB (titankatylisierter Polyester mit einem SV-Wert von 1050, der 30 ppm Titan aus dem Polykondensationskatalysator enthält; Hersteller: Bostik-Findley, USA; der Polyester enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Substratfolie bestehend aus:
Schicht (A):
   - 100 Gew.-%: Polyethylenterephthalat, das 15 ppm Titan aus dem Polykondensationskatalysator Titandioxid (TiO₂) mit einem SV-Wert von 800 enthält
Schicht (B):
   - 100 Gew.-%: Polyethylenterephthalat, das 300 ppm Antimon aus dem Polykondensationskatalysator Antimontrioxid (Sb₂O₃) mit einem SV-Wert von 800 enthält
Deckschicht (C), Mischung aus:
   - 85 Gew.-%: Polyethylenterephthalat, das 300 ppm Antimon aus dem Polykondensationskatalysator Antimontrioxid (Sb₂O₃) mit einem SV-Wert von 800 enthält
   - 15 Gew.-%: antimonkatalysiertes Masterbatch aus 99 Gew.-% Polyethylenterephthalat (SV-Wert von 800) und 1,0 Gew.-% Sylobloc 44 H (synthetisches SiO₂ , Grace, Worms, DE), d₅₀ = 2,5 µm

Die Mindestsiegeltemperatur der Folie gegenüber der APET-Seite von APET/CPET-Menüschalen hatte sich gegenüber Beispiel 2 nicht geändert. Die Siegelnahtfestigkeiten der Folien waren vergleichbar mit denen in Beispiel 2. Weiterhin hatte die Folie die geforderte ansprechende Optik, gute Migrationswerte und gute sensorische Eigenschaften.

### Vergleichsbeispiel 1

Eine dreischichtige Folie (ABC) wurde über die Coextrusionstechnologie ohne siegelfähige Beschichtung hergestellt. Alle drei Schichten enthielten Polyester mit Katalysator auf Basis von Antimon.
Deckschicht (A), Mischung aus:
   - 85 Gew.-%: Polyethylenterephthalat, das 300 ppm Antimon aus dem Polykondensationskatalysator Antimontrioxid (Sb₂O₃) mit einem SV-Wert von 800 enthält
   - 15 Gew.-%: antimonkatalysiertes Masterbatch aus 99 Gew.-% Polyethylenterephthalat (SV-Wert von 800) und 1,0 Gew.-% Sylobloc 44 H (synthetisches SiO₂, Grace, Worms, DE), d₅₀ = 2,5 µm
Schicht (B):
   - 100 Gew.-%: Polyethylenterephthalat, das 15 ppm Titan aus dem Polykondensationskatalysator Titandioxid (TiO₂) mit einem SV-Wert von 800 enthält.
Deckschicht (C), Mischung aus:
   - 85 Gew.-%: Polyethylenterephthalat, das 300 ppm Antimon aus dem Polykondensationskatalysator Antimontrioxid (Sb₂O₃) mit einem SV-Wert von 800 enthält.
   - 15 Gew.-%: antimonkatalysiertes Masterbatch aus 99 Gew.-% Polyethylenterephthalat (SV-Wert von 800) und 1,0 Gew.-% Sylobloc 44 H (synthetisches SiO₂ , Grace, Worms), d₅₀ = 2,5 µm

Die Folie ließ sich nicht gegen Menüschalen siegeln. Die Gesamtmigration in Olivenöl und die senorischen Eigenschaften waren gut, aber die Antimonmigration war schlecht.

### Vergleichsbeispiel 2

Vergleichsbespiel 1 wurde wiederholt, jedoch mit titankatalysierten Polyestern in der Deckschicht (A). Alle andere Parameter waren unverändert. Die Antimonmigration war gut, alle anderen Eigenschaften waren unverändert.

### Vergleichsbeispiel 3

Beispiel 1 wurde wiederholt, wobei in allen Schichten anstelle von titankatalysierten Polyestern antimonkatalysierte Polyester verwendet wurden. Die Konzentration des Antimons betrug dabei in allen Schichten 300 ppm. Ansonsten wurden keine Änderungen durchgeführt. Das Peelverhalten und die Gesamtmigration der hergestellten Folien waren gut, die Antimonmigration war jedoch schlecht.

### Vergleichsbeispiel 4

Vergleichsbeispiel 3 wurde wiederholt mit der Peelschicht unter Verwendung von titankatalysiertem Polyester in der Peelschicht. Die Antimon-Konzentration in den übrigen Schichten betrug 300 ppm. Ansonsten wurden keine Änderungen durchgeführt. Das Siegel- und Peelverhalten, die Gesamtmigration und die Sensorik waren gut. Die Antimonmigration war zwar geringer, jedoch immer noch schlecht.

### Vergleichsbeispiel 5

Beispiel 1 wurde wiederholt, jedoch mit einem anderen Siegelrohstoff in der Beschichtung (D). Anstelle einer Mischung aus Polyester I und II wurde ein Ethylen-Vinylacetat-Copolymeres eingesetzt, das aus 24 Mol-% Vinylacetat-Einheiten bestand.

Das Siegel- und Peelverhalten war gut, jedoch waren die Gesamtmigration und die sensorischen Eigenschaften schlecht.

In den Tabellen 2 und 3 sind die Folienzusammensetzungen und wichtigsten Versuchsergebnisse gemäß den Ausführungsbeispielen 1 bis 3 und Vergleichsbeispielen 1 bis 5 wiedergegeben.

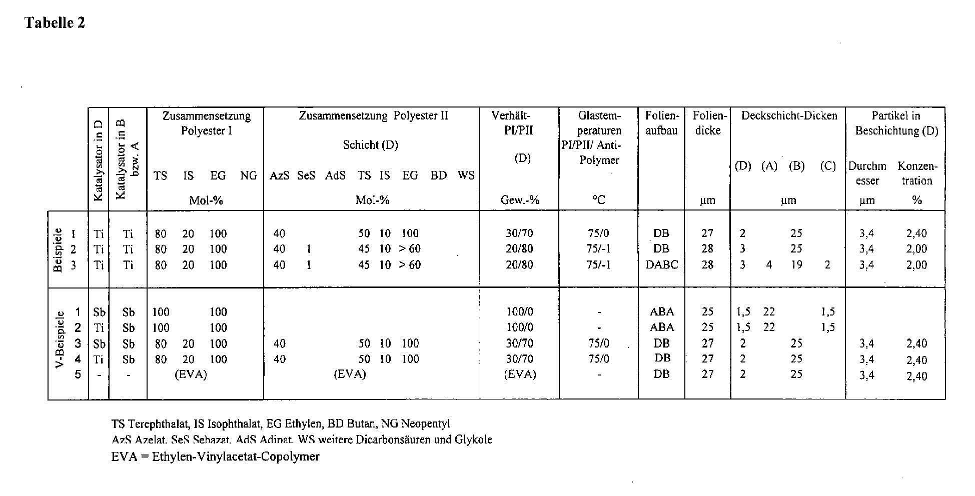

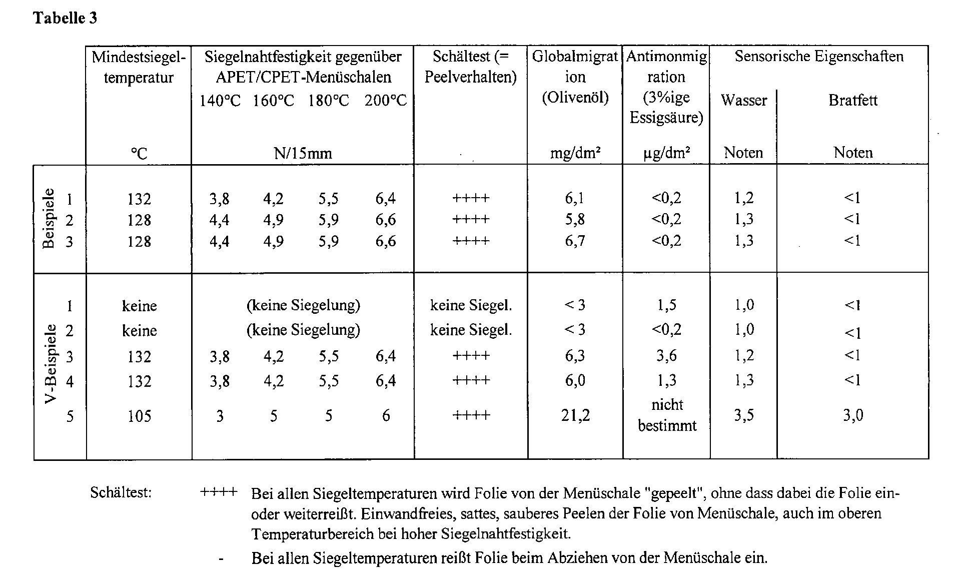

## Patentansprüche

1. Biaxial orientierte Polyesterfolie, welche eine Substratschicht und eine auf diese durch Beschichten aufgebrachte, heißsiegelbare und gegenüber amorphem und kristallinem Polyester peelfähige Schicht (D) aufweist, wobei
a) die Schicht (D) Polyester enthält, der aromatische und aliphatische Dicarbonsäureeinheiten aufweist, und
b) die Schicht (D) und zumindest der direkt an die Schicht (D) angrenzende Teilbereich der Substratschicht titankatalysierten Polyester mit einer Titankonzentration von 1 bis 150 ppm enthalten.

2. Polyesterfolie nach Anspruch 1, **dadurch gekennzeichnet, dass** der direkt an die Schicht (D) angrenzende Teilbereich der Substratschicht eine Dicke von mindestens 2 µm aufweist.

3. Polyesterfolie nach Anspruch 1 oder 2, **dadurch gekennzeichnet, dass** die Folie als Polyester ausschließlich titankatalysierten Polyester enthält.

4. Polyesterfolie nach einem oder mehreren der Ansprüche 1 bis 3, **dadurch gekennzeichnet, dass** die Folie als Polymere ausschließlich titankatalysierte Polyester enthält.

5. Polyesterfolie nach einem oder mehreren der Ansprüche 1 bis 4, **dadurch gekennzeichnet, dass** die Substratschicht aus mehreren Schichten besteht und eine dieser Schichten den an die Schicht (D) direkt angrenzenden Teilbereich der Substratschicht darstellt.

6. Polyesterfolie nach einem oder mehreren der Ansprüche 1 bis 5, **dadurch gekennzeichnet, dass** die Substratschicht einen A-B-C-Schichtaufbau aufweist, wobei (A) dem direkt an die Schicht (D) angrenzenden Teilbereich der Substratschicht entspricht und (C) eine nicht heißsiegelbare Deckschicht darstellt.

7. Polyesterfolie nach einem oder mehreren der Ansprüche 1 bis 6, **dadurch gekennzeichnet, dass** der Polyester der Schicht (D) zu 25 bis 95 Mol-% aus aromatischen Dicarbonsäureeinheiten und zu 5 bis 75 Mol-% aus aliphatischen Dicarbonsäureeinheiten aufgebaut ist.

8. Polyesterfolie nach einem oder mehreren der Ansprüche 1 bis 7, **dadurch gekennzeichnet, dass** die aliphatischen Dicarbonsäureeinheiten des Polyesters der Schicht (D) Terephthalsäure- , Isophthalsäure- oder 2,6-Naphthalindicarbonsäure-Einheiten sind.

9. Polyesterfolie nach einem oder mehreren der Ansprüche 1 bis 8, **dadurch gekennzeichnet, dass** die aliphatischen Dicarbonsäureeinheiten des Polyesters der Schicht (D) Pimelinsäure-, Korksäure-, Azelainsäure-, Sebazinsäure-, Glutarsäure- oder Adipinsäure-Einheiten sind.

10. Polyesterfolie nach einem oder mehreren der Ansprüche 1 bis 9, **dadurch gekennzeichnet, dass** die Schicht (D) einen Polyester enthält, der Azelainsäure-, Terephthalsäure-, Isophthalsäure- und Ethylenglykol-Einheiten aufweist.

11. Polyesterfolie nach einem oder mehreren der Ansprüche 1 bis 10, **dadurch gekennzeichnet, dass** die Schicht (D) einen Polyester enthält, der Ethylenterephthalat- und Ethylenisophthalat-Einheiten aufweist.

12. Polyesterfolie nach einem oder mehreren der Ansprüche 1 bis 11, **dadurch gekennzeichnet, dass** die Schicht (D) anorganische oder organische Partikel mit einem mittleren Partikeldurchmesser d₅₀ von 2,5 bis 8 µm enthält.

13. Polyesterfolie nach einem oder mehreren der Ansprüche 1 bis 12, **dadurch gekennzeichnet, dass** die Schicht (D) anorganische oder organische Partikel in einer Konzentration von 0,5 bis 10 Gew.% enthält.

14. Polyesterfolie nach einem oder mehreren der Ansprüche 1 bis 13, **dadurch gekennzeichnet, dass** die Schicht (D) als Partikel synthetisches SiO₂ enthält.

15. Polyesterfolie nach einem oder mehreren der Ansprüche 1 bis 14, **dadurch gekennzeichnet, dass** die Substratschicht Polyethylenterephthalat enthält.

16. Polyesterfolie nach einem oder mehreren der Ansprüche 1 bis 15, **dadurch gekennzeichnet, dass** die Schicht (D) gegenüber amorphem und kristallinem Polyester eine Siegelanspringtemperatur von weniger als 150 °C und eine Siegelnahtfestigkeit bei einer Siegeltemperatur von 180 °C von mindestens 2 N/15 mm aufweist.

17. Polyesterfolie nach einem oder mehreren der Ansprüche 1 bis 16, **dadurch gekennzeichnet, dass** die Schicht (D) gegenüber amorphem und kristallinem Polyester eine maximale Siegeltemperatur von 220 °C aufweist.

18. Polyesterfolie nach einem oder mehreren der Ansprüche 1 bis 17, **dadurch gekennzeichnet, dass** die Schicht (D) eine Dicke von 0,5 bis 10 µm aufweist.

19. Verfahren zur Herstellung einer Polyesterfolie nach einem oder mehreren der Ansprüche 1 bis 18 umfassend die Schritte:
a. Herstellen einer ein- oder mehrschichtigen Substratfolie durch Extrusion oder Coextrusion,
b. Strecken der Substratfolie in einer ersten Richtung,
c. Strecken der Substratfolie in einer zweiten, zur ersten orthogonalen Richtung,
d. Thermofixieren der gestreckten Substratfolie und
e. Beschichten zumindest einer Oberfläche der Substratfolie zur Erzeugung der Schicht (D).

20. Verfahren nach Anspruch 19, **dadurch gekennzeichnet, dass** der Schritt e) in-line vor dem Schritt b) oder zwischen den Schritten b) und c) oder off-line nach Herstellung der Substratfolie in einem separaten Arbeitsschritt erfolgt.

21. Verwendung einer Polyesterfolie nach einem oder mehreren der Ansprüche 1 bis 18 als Verpackungsmaterial für Nahrungs- und Genussmittel.

22. Verwendung einer Polyesterfolie nach Anspruch 21 als peelfähige Deckelfolie für Menüschalen aus kristallinem und amorphem Polyester.
